(19) Europäisches Patentamt
European Patent Office
Office européen des brevets

(11) EP 1 475 796 A2

(12) EUROPEAN PATENT APPLICATION

(43) Date of publication:
10.11.2004 Bulletin 2004/46

(51) Int Cl.⁷: G11B 11/105

(21) Application number: 04010850.8

(22) Date of filing: 06.05.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(30) Priority: 08.05.2003 JP 2003130014

(71) Applicant: SONY CORPORATION
Tokyo (JP)

(72) Inventors:
• Tanaka, Yasuhitoc/o Sony Corporation
Tokyo (JP)

• Fujiie, Kazuhikoc/o Sony Corporation
Tokyo (JP)
• Fujita, Goroc/o Sony Corporation
Tokyo (JP)
• Sakamoto, Tetsuhiroc/o Sony Corporation
Tokyo (JP)
• Miki, Takeshic/o Sony Corporation
Tokyo (JP)

(74) Representative: Melzer, Wolfgang, Dipl.-Ing. et al
Patentanwälte
Mitscherlich & Partner,
Sonnenstrasse 33
80331 München (DE)

(54) **Record/Playback apparatus and record/playback method**

(57) An optical head is used to record and playback information to and from a magneto-optical storage medium having a displacement layer, a disconnecting layer, and a recording layer that are stacked in this order. The displacement layer is defined by a perpendicular magnetic film that is relatively smaller in domain-wall coercivity and that is greater in domain-wall mobility than the recording layer and the disconnecting layer is defined by a magnetic layer that is lower in Curie temperature than the displacement layer and the recording layer. An optimum offset value is set for causing tracking of the optical head to a recording track provided on the magneto-optical storage medium.

FIG. 1A

FIG. 1B

TEMPERATURE
OF MEDIUM
T

TEMPERATURE
DISTRIBUTION OF
MAGNETIC LAYER

Ts

X

FIG. 1C

$\sigma$

DOMAIN-WALL
ENERGY DENSITY

X

FIG. 1D

F(x)

X

FIG. 1E

## Description

BACKGROUND OF THE INVENTION

1. Field of the Invention

The present invention relates to an apparatus and a method for recording and playing back information to and from a magneto-optical storage medium having a displacement layer, a disconnecting layer, and a recording layer that are stacked in this order, the displacement layer being defined by a perpendicular magnetic film that is relatively smaller in domain-wall coercivity and that is greater in domain-wall mobility than the recording layer and the disconnecting layer being defined by a magnetic layer that is lower in Curie temperature than the displacement layer and the recording layer.

2. Description of the Related Art

In recent years, magneto-optical disks are gaining attention as high-density rewritable recording media. Examples include a magneto-optical playback system as disclosed in Patent Document 1 (Japanese Unexamined Patent Application Publication No. 6-290496). In the system, a magneto-optical disk has at least three layers, namely, a displacement layer, a disconnecting layer, and a recording layer. During playback of a signal, domain-wall movement of the displacement layer is utilized in a region where a magnetic film temperature is higher than the Curie temperature of the disconnecting layer, thereby increasing the size of effectively recorded domain walls and increasing a playback carrier signal.

In the playback system called DWDD (domain wall displacement detection), a very large amount of signal can be played back from even minute record domain walls having a period less than or equal to the optical limit resolution of playback light. The system is one of promising candidates that can achieve a high density, for example, without changing the wavelength of light and the numerical aperture (NA) of the objective lens.

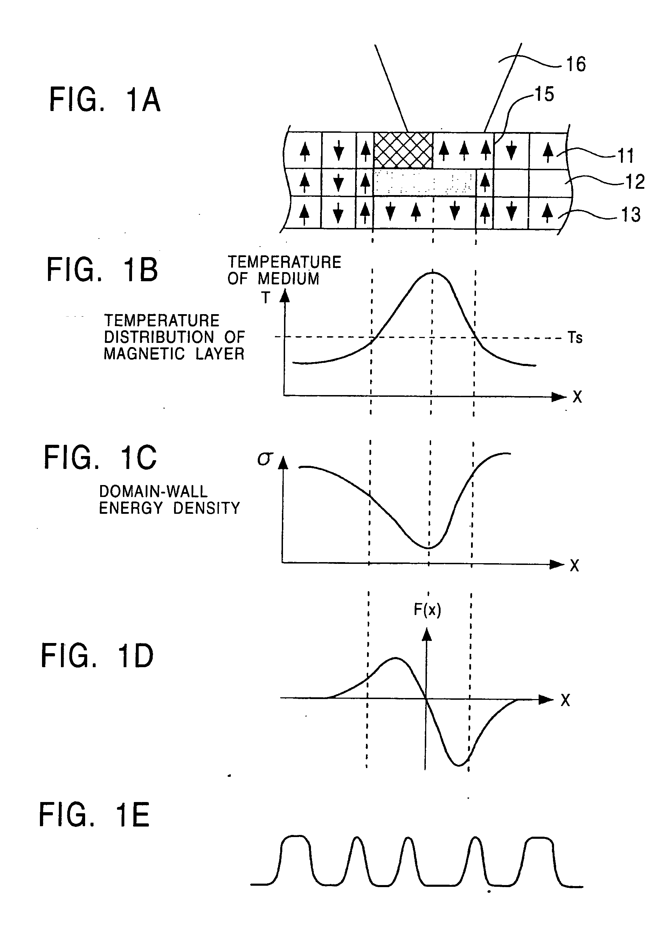

Driving force for domain displacement during DWDD playback is expressed by a rate of change in domain wall energy caused by a temperature gradient. This will be briefly described with reference to FIGS. 1A to 1E.

FIG. 1A is a cross-sectional view of a magneto-optical storage medium used for DWDD playback. As shown, a displacement layer 11, a disconnecting layer 12, and a recording layer 13 are provided.

When the magneto-optical storage medium is not illuminated with playback laser light, each layer is under the influence of exchange coupling, so that the directions of atomic spins in the displacement layer 11 and the disconnecting layer 12 are aligned with those in the recording layer 13, the directions of the atomic spins being indicated by the arrows.

When the magneto-optical storage medium is illuminated with a playback light-beam spot 16, for example, the distribution of temperature T of the magnetic layer is obtained as shown in FIG. 1B. Reference character Ts indicates the Curie temperature of the disconnecting layer 12.

In conjunction with such temperature distribution, the distribution of domain-wall energy density $\sigma$1 is formed as shown in FIG. 1C. Since domain-wall energy density $\sigma$ generally decreases with an increasing temperature, the domain-wall energy density $\sigma$ is also distributed to reach its minimum at a position where the temperature is the highest. As a result, when an attempt is made to move the domain walls 15 toward higher temperature positions where the domain-wall energy density $\sigma$ is lower, a domain-wall driving force F(x) is generated as shown in FIG. 1D.

In this manner, when the domain-wall energy density $\sigma$1 has a gradient in the direction x in FIG. 1D, a domain-wall driving force F1 that is expressed by the following equation (1) acts on the domain walls 15 in each layer.

$$F1 = -\partial\sigma1/\partial x \qquad (1)$$

This domain-wall driving force F1 acts so as to move the domain walls 15 toward positions where the domain wall energy is lower.

At a position where the temperature of the medium is lower than the Curie temperature Ts of the disconnecting layer 12, the individual magnetic layers are exchange-coupled with each other. Thus, even when the domain-wall driving force F(x) due to the above-noted temperature gradient acts on the magnetic layers, the domain-wall driving force F(x) is blocked by a large domain-wall coercivity of the recording layer 13, so that the domain walls 15 do not move. However, at a position where the temperature of the storage medium is higher than the Curie temperature, the exchange coupling between the displacement layer 11 and the recording layer 13 is disconnected. Thus, the domain walls in the displacement layer 11 having a small domain-wall coercivity can be moved by the domain-wall driving force F(x) due to the temperature gradient. As a result, as the light beam 16 scans the storage medium, at the moment when the domain walls exceed the position of the Curie temperature Ts to enter a coupling disconnection region, the domain walls 15 in the displacement layer 11 move toward a higher temperature position.

Based on this principle, every time the domain walls 15 that are formed in the storage medium at intervals corresponding to recoding signals pass positions of the Curie temperature Ts as the light beam 16 scans the medium, the movement of the domain walls 15 of the displacement layers 11 occurs.

This driving force makes it possible to increase the size of effectively recorded domains in the playback layer, to increase the amount of playback carrier signal, and to perform playback that exceeds an optical limit. As a result, a playback waveform as shown in FIG. 1E is obtained.

The light optical information record/playback media, as well as the DWDD medium, are made by forming films on a transparent substrate containing polycarbonate or the like. Grooves for guiding a light spot are pre-formed in the transparent substrate to provide a record/playback track, and information is formed as marks in the track, so that the information is recorded on the track.

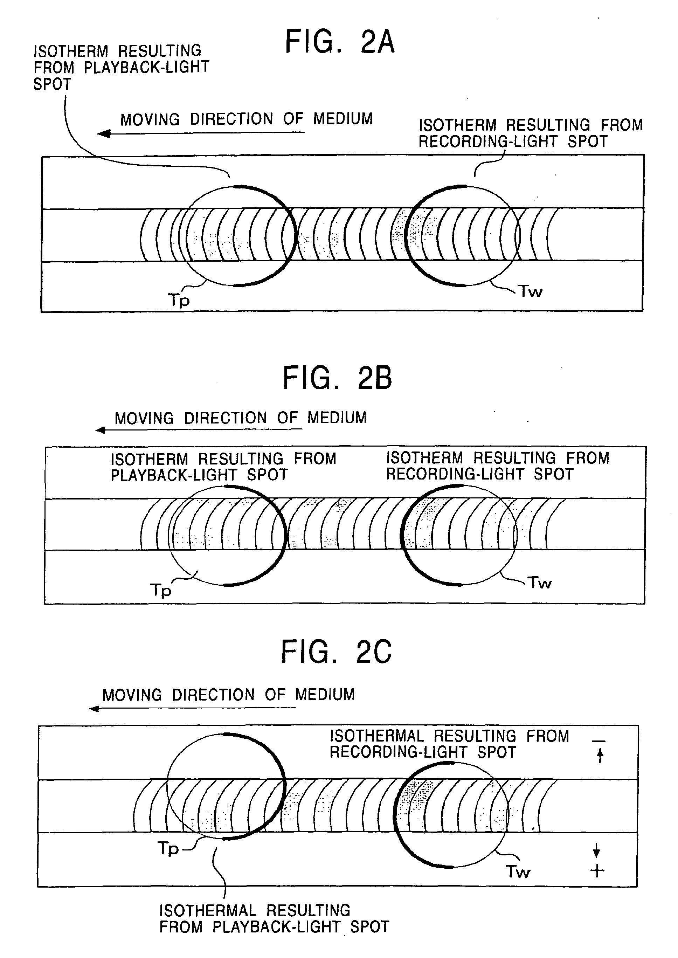

FIGS. 2A to 2C schematically show domains in which information is recorded by magnetic-field modulation recording and a state in which the information is played back by DWDD. The temperature of the recording film is increased to a Curie point or higher by a light spot and a modulated magnetic field corresponding to the information is simultaneously applied to the medium, thereby performing the recording.

The timing when the domains are determined depends on a temperature at which the coercivity of the recording film becomes larger than the applied magnetic field. Thus, as shown in FIG. 2A, the magnetization direction is sequentially determined along the trailing end, represented by a heavy line, of an isotherm Tw resulting from a recording light spot. As a result, the domains have a crescent shape, i.e., a shape protruding in the moving direction of the medium, as shown.

In this manner, when marks recorded on a DWDD medium are played back, every time the domain walls 15 of the displacement layer 11 pass the position of the Curie temperature Ts as the light beam 16 scans the medium, the movement of the domain walls 15 of the displacement layer 11 occurs, as described with reference to FIGS. 1A to 1E. As a result, the domain walls move along the leading edge (represented by a heavy line) of an isotherm Tp resulting from the playback light spot shown in FIG. 2A.

FIG. 2A shows a record/playback state when the domains walls are recorded right along the center of a recording track. That is, FIG. 2A shows a case in which recording is performed while tracking is controlled so as to position the recording light spot along the center of the recording track.

FIG. 2B shows a case in which domains are recorded in a detracking state in which the tracking control position of the laser light is offset relative to the recording track.

In this case, since the isotherm Tw resulting from the recording light spot is displaced in the tracking direction as shown, the crescent shape of the domains recorded are different from that in the case of FIG. 2A.

Thus, during playback, an angle defined by the inclination of the domain walls and the leading edge of the isotherm Tp resulting from the light spot during playback is increased compared to the angle in the case of FIG. 2A.

In this case, the domain-wall driving force F1 is generated against the domain walls of the displacement layer in a temporally distributed manner. As a result, a driving force as an integral decreases and domain walls do not move smoothly.

As a tracking technology for causing a light spot to trace the center of a pre-formed recording track, a push-pull system is available. In this system, the intensities of light resulting from light spot refracted by the recording track are detected by photodetectors provided symmetrically with respect to a longitudinal directional of the recording track and a difference therebetween is used as an error signal. When the light spot is caused to trace the center of the recording track, the intensities of reflection light detected by the symmetrically-arranged photodetectors become equal to each other. Thus, feedback for a lens actuator is performed such that a difference signal becomes zero.

With this tracking system, in a case in which a pre-formed track has an asymmetric shape, even when a light spot is caused to trace the center of the track, so-called "detrack tracking" in which the light spot traces an offset position, occurs, since the intensities detected by the respective symmetrically-arranged photodetectors are different from each other. Also, when the disk is tilted relative to the optical axis of a light beam, the same phenomenon occurs and offsetting occurs. While a case using a push-pull system as a tracking system has been described, the same phenomenon occurs with other systems.

When detrack tracking occurs in that manner, the situation described with reference to FIG. 2B occurs, and consequently a decline in playback performance, such as a deterioration in error rate, occurs.

Additionally, technologies for correcting the detrack tracking have been disclosed in, for example, Patent Document 2 (Japanese Unexamined Patent Application Publication No. 2002-298396) and Patent Document 3 (Japanese Unexamined Patent Application Publication No. 8-129763).

However, a technology for correcting the detrack tracking with high accuracy has not been proposed for a record/playback apparatus for a storage medium based on domain-wall movement system, such as a DWDD system.

SUMMARY OF THE INVENTION

Accordingly, an object of the present invention is to provide a technology for correcting detrack tracking in a storage medium based on domain-wall movement system with high accuracy. A first aspect of the present invention provides a record/playback apparatus for recording and playing back information to and from a magneto-optical storage medium having a displacement layer, a disconnecting layer, and a recording layer that are stacked in this order. The displacement layer is defined by a perpendicular magnetic film that is relatively smaller'in domain-wall coercivity and that is greater in domain-wall mobility than the recording layer and the disconnecting layer is defined by a magnetic layer that is lower in curie temperature than the displacement layer and the recording layer. The record/playback apparatus includes head means for illuminating the magneto-optical storage medium with laser light and for detecting reflected-light information from the magneto-optical storage medium, record processing means for supplying record data to the head means, playback processing means for obtaining playback information in accordance with the reflected-light information detected by the head means, tracking servo means for performing a tracking servo operation in accordance with a tracking error signal generated from the reflected-light information detected by the head means, and offset means for applying an offset to the tracking error signal. The record/playback apparatus further includes controlling means for executing a test operation in which the control means controls the record processing means such that the head means executes recording of a test pattern to the magneto-optical storage medium while an offset value applied by the offset means is set to a certain value; controls playback of the test pattern, the playback being performed by the head means and the playback processing means while the offset value is held; and detects at least one playback signal quality. The controlling means executes the test operation while changing the offset value in a step-by-step manner, determines an optimum offset value, and sets the offset value of the offset means to the determined optimum offset value.

Another aspect of the present invention provides a record/playback method for recording data to a magneto-optical storage medium by illumining the magneto-optical storage medium with laser light from head means, for reading recorded data by detecting reflected-light information from the storage medium, and for recording and playing back information by a tracking servo operation in accordance with a tracking error signal generated from the reflected-light information and an offset value set by offset means. The magneto-optical storage medium has a displacement layer, a disconnecting layer, and a recording layer that are stacked in this order. The displacement layer is defined by a perpendicular magnetic film that is relatively smaller in domain-wall coercivity and that is greater in domain-wall mobility than the recording layer and the disconnecting layer is defined by a magnetic layer that is lower in curie temperature than the displacement layer and the recording layer. The record/playback method includes a test step of causing the head means to record a test pattern to the magneto-optical storage medium for each of a plurality of offset values for applying an offset to the tracking error signal, causing the head means to playback the recorded test pattern while the offset value set during the recording of the test pattern is held, and detecting at least one playback signal quality of the test pattern. The record/playback method further includes an optimum-value determining step of determining an optimum value of the offset value for the magneto-optical storage medium in accordance with the playback signal quality obtained in the test step, and a step of setting the optimum value determined in the optimum-value determining step in the offset means.

Still another aspect of the present invention provides a record/playback apparatus for recording and playing back information to and from a magneto-optical storage medium having a displacement layer, a disconnecting layer, and a recording layer that are stacked in this order. The displacement layer is defined by a perpendicular magnetic film that is relatively smaller in domain-wall coercivity and that is greater in domain-wall mobility than the recording layer and the disconnecting layer is defined by a magnetic layer that is lower in curie temperature than the displacement layer and the recording layer. The record/playback apparatus includes an optical head for illuminating the magneto-optical storage medium with laser light, detecting laser light reflected from the magneto-optical storage medium, and outputting a playback signal, and for generating a tracking error signal. The record/playback apparatus further includes a tracking servo for causing tracking of the optical head to a track formed on the magneto-optical storage medium, in accordance with the tracking error signal output from the optical head and a set offset signal. The record/playback apparatus further includes a memory and a controller. The controller sequentially sets a plurality of offset signals in the tracking servo, supplies a test pattern for the magneto-optical storage medium to the optical head for each set offset signal, detects a playback signal quality of the test pattern played back from the magneto-optical storage medium while the offset signal is held, stores the playback signal quality in the memory, detects an optimum offset signal in accordance with the playback signal quality stored in the memory, and sets the optimum offset signal in the tracking servo.

BRIEF DESCRIPTION OF THE DRAWINGS

FIG. 1A is a cross-sectional view of a storage medium to describe DWDD playback;
FIG. 1B is a graph showing a temperature distribution in a magnetic layer to describe the DWDD playback;
FIG. 1C is a graph showing domain-wall energy density to describe the DWDD playback;
FIG. 1D is a graph showing domain-wall driving force to describe the DWDD playback;
FIG. 1E is a graph showing a playback waveform to describe the DWDD playback;
FIG. 2A shows a state in which record/playback is performed when domain walls are recorded along the center of a recording track, to describe a DWDD record/playback and tracking offset;

FIG. 2B shows a state in which domain walls are recorded in a detracking state to describe the DWDD record/playback and the tracking offset;

FIG. 2C shows a state in which the direction of detracking during recording and the direction of detracking during playback are opposite to each other, to describe the DWDD record/playback and the tracking offset;

FIG. 3 is a block diagram of a record/playback apparatus according to an embodiment of the present invention;

FIG. 4A is a block diagram of a tracking servo system in the embodiment;

FIG. 4B is a view of a photodetector in the tracking servo system in the embodiment;

FIG. 5 is flow chart showing record/playback preparation processing in the embodiment;

FIG. 6 is a table illustrating a state of inspection values are stored in the record/playback preparation processing in the embodiment;

FIG. 7A is a graph showing the characteristic of the amount of detracking versus a bit error rate during playback in the record/playback preparation processing in the embodiment, the amount of detracking and the bit error rate being plotted for each detracking direction during recording;

FIG. 7B is a graph showing the characteristic of the amount of detracking versus a bit error rate during recording in a detracking state in the record/playback preparation processing in the embodiment;

FIG. 8 is a graph for describing an improvement in characteristics in the record/playback preparation processing in the embodiment;

FIG. 9 is a flow chart of another example of record/playback preparation processing in the embodiment;

FIG. 10A is a block diagram of alternative tracking servo system in the embodiment; and

FIG. 10B is a view of a photodetector in the alternative tracking servo system in the embodiment.

DESCRIPTION OF THE PREFERRED EMBODIMENTS

The present invention will be described below in conjunction with embodiments thereof.

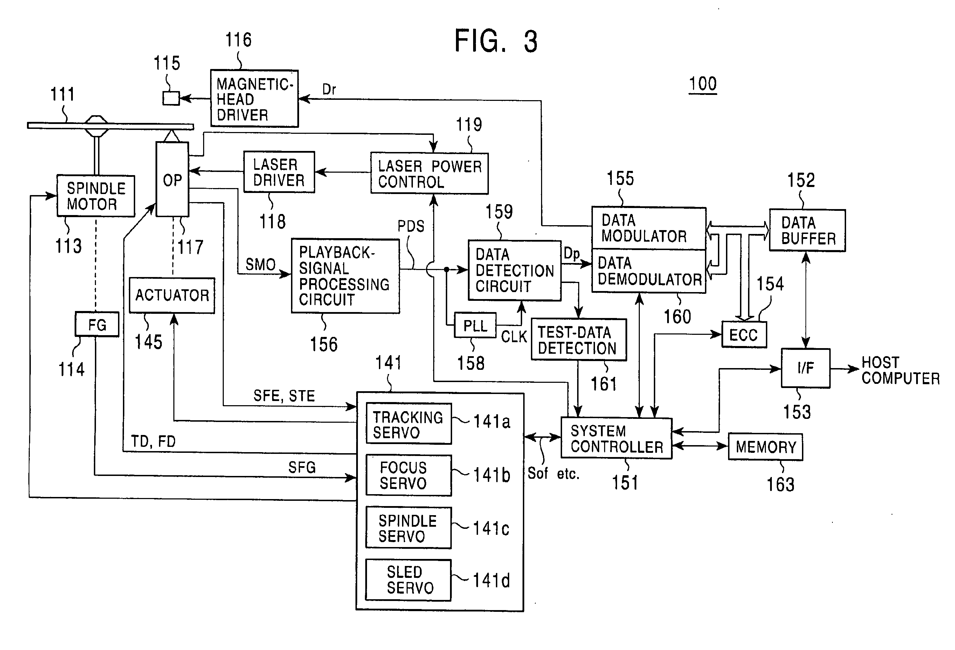

FIG. 3 is a block diagram schematically illustrating a magneto-optical disk record/playback apparatus 100 according to the present invention. A magneto-optical disk 111 handled by the record/playback apparatus 100 is made by depositing a magneto-optical recording film on, for example, a glass or plastic transparent substrate, as shown in FIG. 1A, and by providing a protection film thereon. The record/playback apparatus 100 performs playback based on a DWDD system.

The record/playback apparatus 100 includes a spindle motor 113 for rotating and driving the magneto-optical disk 111. The magneto-optical disk 111 is rotated and driven at a constant angular velocity during recording and during playback. The rotation shaft of the spindle motor 113 is provided with a frequency generator (FG) 114 for detecting the rotational speed.

The record/playback apparatus 100 further includes a magnetic head 115 for generating an external magnetic field, a magnetic-head driver 116 for controlling the magnetic-field generation performed by the magnetic head 115, and an optical head (OP) 117. The optical head 117 includes a semiconductor laser, an objective lens, a two-axis mechanism for driving the objective lens in a focus direction and a tracking direction, a photodetector, and a matrix amplifier. The record/playback apparatus 100 further includes a laser driver 118 for driving the light emission of the semiconductor laser in the optical head 117 and a laser-power control unit 119 for controlling the laser driver 118 such that the drive level of the laser emission is controlled. The magnetic head 115 and the optical head 117 are arranged to oppose each other so as to sandwich the magneto-optical disk 111.

The laser driver 118 applies a drive signal to the semiconductor laser in the optical head 117. In response to the application, the semiconductor laser emits laser light. The record/playback apparatus 100 further includes a system controller 151 having a CPU (central processing unit). In accordance with a control signal sent from the system controller 151, the laser-power control unit 119 controls the laser driver 118 so that, during recording, the laser is driven at a recording power level, and so that, during playback, the laser is driven at a playback power level that is lower than the recording power level. The system controller 151 sets the laser power level for the recording power and the playback power.

The laser-power control unit 119 uses a monitoring detector provided in the optical head 117 to monitor the level of the laser output and performs so-called "APC control" so as to maintain the laser power whose output level has been set.

During recording, i.e., at the time of writing data, record data Dr is supplied as NRZI (non-return to zero inverted) data to the magnetic-head driver 116, as described below, a magnetic field corresponding to the record data Dr is generated by the magnetic head 115, and the record data Dr is recorded on the magneto-optical disk 111 through the corporation of the magnetic field and a laser light beam emitted from the optical head 117.

The record/playback apparatus 100 further includes a servo controller 141 implemented by, for example, a DSP (digital signal processor).

The servo controller 141 includes a tracking servo unit 141a, a focus servo unit 141b, a spindle servo unit 141c, and a sled servo unit 141d.

In accordance with reflected-light information obtained by the photodetector, a matrix circuit in the optical head 117 generates a focus error signal SFE and a tracking error signal STE. The frequency generator 114 outputs a frequency signal SFG. Those signals SFE, STE, and SFG are supplied to the servo controller 141.

The operation of the servo controller 141 is controlled by the system controller 151, which is described below in detail. The tracking servo unit 141a and the focus servo unit 141b in the servo controller 141 drive the two-axis mechanism in the optical head 117, so as to perform tracking servo control and focus servo control.

That is, the tracking servo unit 141a generates a tracking drive signal TD in accordance with the tracking error signal STE, so that drive electrical current is applied to a tracking coil of the two-axis mechanism. This causes the objective lens to be servo-controlled in the tracking direction.

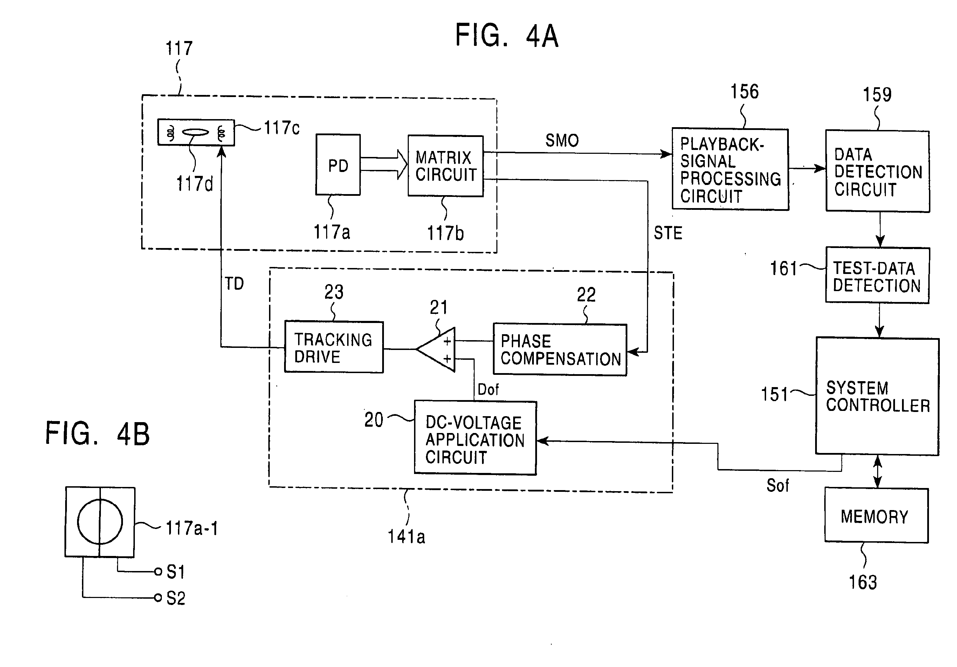

A tracking system therefor will be described later with reference to FIG. 4A.

The focus servo unit 141b generates a focus drive signal FD in accordance with the focus error signal SFE, so that drive electrical current is applied to a focus coil of the two-axis mechanism. This causes the objective lens to be servo-controlled in a focus direction.

The sled servo unit 141d generates a sled drive signal, based on, for example, a lower frequency component of the tracking error signal STE, to drive an actuator 145, which includes an linear motor for moving the optical head 117 in the radial direction of the magneto-optical disk 111.

The spindle-motor servo unit 141c controls the spindle motor 113 in accordance with the frequency signal SFG, so that the magneto-optical disk 111 is controlled so as to rotate at a constant angular velocity during recording and during playback, as described above.

The record/playback apparatus 100 further includes a data buffer 152, an interface (I/F) 153 for transmitting/receiving data or a command to/from a host computer, and a memory 163.

The system controller 151 controls the entire system.

The memory 163 generally represents, for example, a RAM (random access memory) serving as a work area for the system controller 151, a ROM (read only memory) for storing an operation program and so on, and a flash memory for storing a setting coefficient and so on. The memory 163 is used by the system controller 151.

The interface 153 is used for communication of data or the like with the host computer or the like. The interface 153 is realized by an interface circuit based on a SCSI (small computer system interface), IEEE1394, or USB (universal serial bus) standard.

The record/playback apparatus 100 further includes an ECC (error correction code) circuit 154, a data modulator 155, and a data demodulator 160. The ECC circuit 154 adds error correction code to write data that is supplied from the host computer via the interface 153 and corrects an error of data output from the data demodulator 160, which is described below. The data modulator 155 converts a data-bit string of the write data to which the error correction code is added by the ECC circuit 154 into, for example, RLL (run length limited) encoded bits and then converts the bits into NRZI data, thereby obtaining the record data Dr.

The record/playback apparatus 100 further includes a playback-signal processing circuit 156 for converting a playback signal obtained by the optical head 117 into playback data, a data detection circuit 159, and a clock synchronization circuit (phase-locked loop [PLL] circuit) 158.

The playback-signal processing circuit 156 has an equivalent circuit and a domain-wall movement detection circuit. The equivalent circuit compensates for a frequency characteristic of a playback signal, and, in accordance with the resulting playback signal, the domain-wall movement detection circuit detects the occurrence of domain-wall movement. The playback-signal processing circuit 156 outputs a pulse data signal PDS that serves as a detection signal indicating the occurrence of domain-wall movement.

The clock synchronization circuit 158 performs PLL processing to obtain a clock signal that is synchronized with the rising edge of the detection signal PDS.

Based on the clock signal output from the clock synchronization circuit 158, the data detection circuit 159 obtains playback data Dp, which serves as RLL encoded data or the like, based on the detection signal PDS.

The data demodulator 160 demodulates the playback data Dp to obtain read playback data.

Prior to recording and playback, which are described below, record/playback preparation processing is performed in which a test pattern is recorded to the disk 111 and is played back therefrom and an optimum value for an offset voltage Dof to be applied to the tracking error signal STE is determined and set. To detect a playback signal of the test pattern during the processing, a test-data detection circuit 161 is provided. The test-data detection circuit 161 supplies detection information to the system controller 151.

During recording/playback of a test pattern, the system controller 151 uses a control signal Sof to give, to the servo controller 141, an instruction for an offset value to be generated.

In accordance with playback data sent from the test-data detection circuit 161, the system controller 151 determines an optimum value for the offset voltage Dof and gives an instruction for the optimum offset value to the servo controller 141.

The playback procedures of the record/playback apparatus 100 will now be described.

When the magneto-optical disk 111 is placed, the system controller 151 sends a predetermined rotational speed to the servo controller 141. A spindle servo control circuit in the servo controller 141 controls the spindle motor 113 so that the magneto-optical disk 111 is rotated at the predetermined rotational speed.

Next, the system controller 151 sends information to the linear actuator 145, so that the optical head 117 is moved to a predetermined position.

Thereafter, the system controller 151 sends information to the laser-power control unit 119 to control the laser driver 118 so that the semiconductor laser emits light at a predetermined power.

The power of light emitted by the semiconductor laser is detected by the monitoring detector, which is provided at the optical head 117 to serve as a power-monitoring light detector (not shown), and a difference between the detected power and a desired power is determined by the laser-power control unit 119. Based on the difference, the power is corrected and controlled to reach a desired value.

The light emitted from the semiconductor laser of the optical head 117 is focused by the objective lens (not shown) thereof onto a film surface of the magneto-optical disk 111.

In this case, the servo controller 141 performs focus control and tracking control so that the laser light is focused on the film surface and the laser light traces a track formed on the magneto-optical disk 111.

Laser light is reflected by the film surface of the magneto-optical disk 111 such that the polarization plane of the light is rotated in accordance with the direction of each recorded domain. The rotation information of the polarization plane is converted by an analyzer, provided in the optical head 117, into intensity information, which is further converted by the photodetector into an electrical signal. The converted electrical signal is subjected to arithmetic processing by the matrix circuit, so that a playback signal SMO is generated and output.

The playback signal SMO is subjected to waveform shaping and domain-wall movement detection by the playback-signal processing circuit 156, so that a binary signal, i.e., the pulse data signal PDS, is obtained. The clock synchronization circuit 158 generates a playback clock CLK that is synchronized with the pulse data signal PDS. Based on the clock CLK, the data detection circuit 159 obtains playback data Dp. The playback data Dp is, for example, RLL encoded data. The playback data Dp is then decoded by the data demodulator 160, so that read data can be obtained.

The read data is stored in the data buffer 152 and is subjected to error correction by the ECC circuit 154, and the resulting data is output to the host computer or the like via the interface 153.

The recording operation will now be described.

Procedures from when the magneto-optical disk 111 is placed until laser light is caused to trace a predetermined position of the magneto-optical disk 111 are analogous those of the above-described playback procedures.

During recording, the following operation is performed under the control of the system controller 151. First, data supplied from the host computer or the like via the interface 153 is stored in the data buffer 152. The data is then subjected to necessary processing, involving error correction coding and data modulation, and the resulting record data Dr is supplied to the magnetic-head driver 116. Thus, an electric field corresponding to the record data Dr is generated by the magnetic head 115.

At the same time, the laser driver 118 and the laser-power control unit 119 are operated so that the semiconductor laser emits light at a greater power than the power output during playback.

The recording magnetic film of the magneto-optical disk 111 is heated by the laser light, and domains of the recording magnetic film are aligned in an electric-filed direction corresponding to data output from the magnetic head 115.

The intensity of the laser light for the recording operation may be constant or may be modulated to produce a pulse that is synchronized with a record clock.

In the record/playback apparatus 100 according to this embodiment, offset setting is performed as tracking bias setting in order to correct the displacement of light spot, with which the disk 111 is illuminated, from the center of a recording track.

The tracking servo is shown in FIG. 4A.

A description is given of an example in which the tracking error signal STE is generated by a push-pull system. As shown in FIG. 4B, the optical head 117 includes a photodetector (PD) 117a, which has a photodetector 117a-1 provided with bisected light-receiving surfaces that are arranged symmetrically with respect to a track line direction. The light receiving surfaces provide light detection signals S1 and S2, which are, in turn, subjected to arithmetic processing by a matrix circuit 117b. Specifically, the matrix circuit 117b performs subtraction processing on the light detection signals S1 and S2 provided by the respective light-receiving surfaces, thereby obtaining a difference between the intensities detected by the symmetric light-receiving surfaces. The difference serves as the tracking error signal STE.

The tracking servo unit 141a of the servo controller 141 includes a phase compensation circuit 22, a summing circuit 21, a tracking drive circuit 23, and a DC-voltage application circuit 20.

The phase of the tracking error signal STE is compensated for by the phase compensation circuit 22 and the resulting signal is supplied to the tracking drive circuit 23 via the summing circuit 21. In accordance with the signal sent from the summing circuit 21, the tracking drive circuit 23 generates the tracking drive signal TD and applies electrical current to the tracking coil of a two-axis mechanism 117c in the optical head 117. This causes an objective lens 117d held by the two-axis mechanism 117c to be driven in the tracking direction. This driving is performed in such a direction that the tracking error signal STE becomes zero to thereby provide a state in which the light spot traces the center of a recording track.

In this case, the DC-voltage application circuit 20 generates a DC voltage according to an instruction from the system controller 151 and supplies the DC voltage to the summing circuit 21 as an offset voltage Dof, so that the offset voltage is applied to the tracking error signal STE.

For the offset voltage Dof, an optimum value is set by record/playback preparation processing, which is described below, data can be recorded and played back in an appropriate tracking state even when the disk 111 is tilted or the shape of a disk substrate is asymmetrical.

During record/playback preparation processing, an operation for recording a test pattern while changing the value of the offset voltage Dof and an operation for playing back the test pattern are repeated.

During the playback of the test pattern, the matrix circuit 117b outputs the playback signal SMO corresponding to the test pattern that is played back as playback data. In response to the playback signal SMO that is sent via the playback-signal processing circuit 156 and the data detection circuit 159, the test-data detection circuit 161 detects test pattern data. Based on the detected test pattern data, the system controller 151 inspects the signal quality.

The record/playback preparation processing will now be described. In a preparation stage for recording and playing back desired information, the record/playback apparatus 100 according to this embodiment records a predetermined test pattern at predetermined spots on the magneto-optical disk 111. During recording, a recording laser power is adjusted prior to a recording operation. A data pattern written during the recording may be, for example, a test pattern used for record/playback preparation processing described below. Alternatively, a test pattern for the record/playback preparation processing may be recorded apart from data written for adjusting the recording laser power.

The system controller 151 stores the data pattern, which serve as the test pattern, for example, in the memory 163.

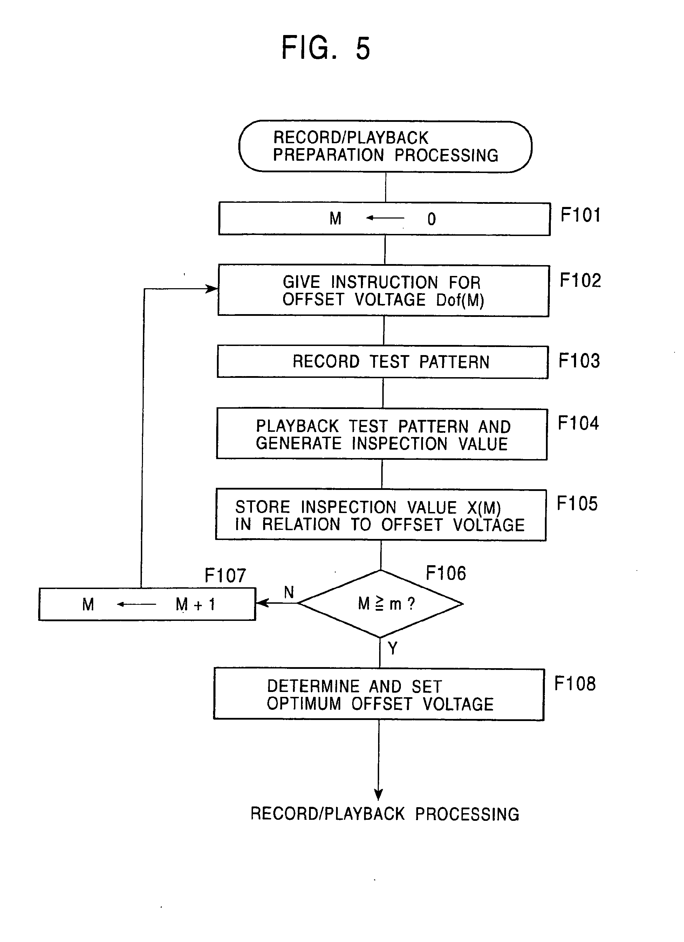

FIG. 5 shows procedures of the record/playback preparation processing performed by the system controller 151.

In brief, in the processing shown in FIG. 5, the offset voltage Dof, which is a DC component to be applied to the tracking error signal STE, is changed to multiple levels, respective test patterns are recorded and played back, and the quality of the resulting playback data is inspected, thereby determining an optimum value for the offset voltage Dof. In particular, during the recording of test pattern data and during the playback thereof, the same offset voltage is applied.

In the record/playback preparation processing, the system controller 151 sets a variable M to "0" in step F101 shown in FIG. 5. The variable M is a variable for setting the value of the offset voltage Dof. For example, when the value of the offset voltage Dof is changed in a step-by-step manner from Dof(0) to Dof(m), the variable M is used to specify the offset voltages Dof(0) to Dof(m) in the form of Dof(M).

As the offset voltage Dof, the offset voltages Dof(0) to Dof(m) have values which are different from each other, for example, from negative to positive values with regular intervals.

In step F102, the system controller 151 sends the control signal Sof to the DC-voltage application circuit 20 to give an instruction for the offset voltage Dof of a voltage Dof(M). Thus, at first, the DC-voltage application circuit 20 is put into a state for generating an offset voltage Dof(0).

In this state, the process proceeds to step F103, in which the system controller 151 causes a test pattern to be recorded on the disk 111. That is, the system controller 151 causes a test pattern to be supplied as record data to the data modulator 155 and causes test pattern data to be written to the disk 111 by the above-described recording operation. In this case, in a tracking servo control state in which the offset voltage Dof(0) is applied to the tracking error signal STE, a light spot is caused to trace a recording track and a recording operation is performed.

Subsequently, in step F104, the system controller 151 causes the test pattern to be played back. In this case as well, the playback is executed in a state in which the DC-voltage application circuit 20 generates the offset voltage Dof(0).

The data of the played-back test pattern is detected by the test-data detection circuit 161. In this case, the test pattern data can be identified, since the system controller 151 keeps track of the data pattern as a test pattern. The system controller 151 checks the data quality and generates an inspection value X(M) indicating the level of the quality.

The data quality can be determined based on a jitter level or an error rate. Thus, a jitter level or an error rate may be detected so as to serve as an inspection value X.

Naturally, other approaches are also possible for evaluating the data quality, and any approach may be employed. For example, a SAM value, which is a numerically-expressed difference between a correct path metric and a played-back path metric in maximum-likelihood decoding, such as Viterbi decoding, has been known. The SAM value may be used as the inspection value X.

Upon generation of the inspection value X(M), in step F105, the system controller 151 stores the inspection value X(M) in the memory 163 in relation to the current offset voltage Dof (M) .

Thus, when an inspection value X(0) is assumed to be initially obtained with an offset voltage Dof (0), the inspection value X(0) is stored in relation to the voltage Dof (0).

Next, in step F106, the system controller 151 determines whether or not the variable M reaches m. When it is determined that M has not reached m, in step F107, the system controller 151 increments the variable M and the process returns to step F102, in which the system controller 151 uses the control signal Sof to give an instruction for the offset voltage Dof of the voltage Dof(M) to the DC-voltage application circuit 20.

Thus, subsequently, in step F103, the offset voltage is changed to a voltage Dof(1) and the test pattern is recorded.

In steps F104 and 105, in the same manner described above, the test pattern is played back and the resulting data is subjected to quality checking and is stored.

In this manner, with a certain laser power, the test pattern is recorded and played back while the offset voltage is sequentially changed from voltage Dof(0) to voltage Dof(m) and the resulting inspection values are stored.

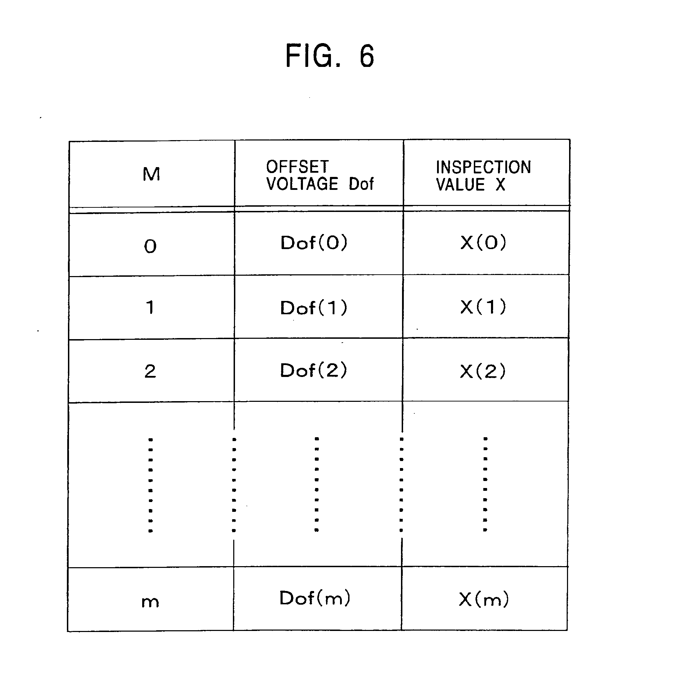

Such processing is repeated, so that the test pattern is recorded and played back with the offset voltages Dof(0) to Dof(m) and respective inspection values X are stored. Thus, for example, at a point when it is determined in step F106 that the variable M reaches m, the inspection values X(0) to X(m) are stored in the memory 163, as shown in FIG. 6. That is, the inspection values X(0) to X(m) are stored in relation to the respective offset voltage Dof(0) to Dof(m) when the respective inspections values are obtained.

Upon completion of the above-described record/playback of the test pattern corresponding to each offset voltage Dof, the process proceeds to step F108, in which the system controller 151 determines an optimum offset voltage Dof in accordance with the corresponding inspection value X.

An optimum offset voltage Dof with which the most preferable inspection value X is obtained may be determined as the optimum offset voltage Dof. Alternatively, for example, an average or total value of inspection values collected for each offset voltage Dof stored as shown in FIG. 6 and a couple of offset voltages adjacent to the offset voltage Dof may be obtained, and an offset voltage Dof with which the value becomes the most favorable may be determined as the optimum offset voltage.

When the optimum offset voltage Dof is determined as described above, the system controller 151 controls the DC-voltage application circuit 20 so that it generates the determined optimum offset voltage Dof.

After the completion of the above-described record/playback preparation processing, the process proceeds to record/playback processing of actual data or enters a state in which the system controller 151 waits for a record/playback instruction.

Since the DC offset voltage to be applied to the tracking error signal STE is optimized by the record/playback preparation processing described above, marks that are symmetric with respect to the center of a pre-formed track can be formed for domains to be recorded.

In particular, in this example, when a test pattern is recorded and played back while value of the offset voltage Dof is being changed, the same offset voltage Dof is generated for both the recording and the playback. For example, immediately after a test pattern is recorded with an offset voltage Dof(1), the test pattern is played back while the offset voltage Dof(1) is being generated. Next, immediately after the test pattern is recorded with an offset voltage Dof(2), the test pattern is played back while the offset voltage Dof(2) is being generated.

In this manner, generating the same offset voltage Dof for a single record/playback operation of a test pattern makes it possible to achieve optimum offset setting for the disk 111, which is a DWDD storage medium, with very high accuracy. This reason will be described below.

With reference to FIGS. 2A and 2B, the description has been given to a phenomenon in which, in a detrack state, because of an increased angle between each domain formed by the trailing edge of the isotherm Tw and the leading edge of the isotherm Tp resulting from the light spot, the domain-wall driving force F1 generated against the domain walls of the displacement layer is temporally distributed, so that a driving force as an integral decreases and thus the domain walls do not move smoothly.

In other words, that phenomenon indicates that detracking in the same direction during the recording and during the playback causes deterioration in the playback characteristic of an error rate or the like.

Now, a case in which the direction of detracking during the recording and the direction of detracking during the playback are opposite to each other, as shown in FIG. 2C, will be discussed. For example, when recording is performed in a positive-direction detracking state and playback is performed in a negative-direction detracking state.

As a result, since a time lag at which the leading edge of the isotherm Tp resulting from the playback light spot affects domains decreases, the driving force as an integral does not decrease. Thus, domain walls move as in the case of FIG. 2A.

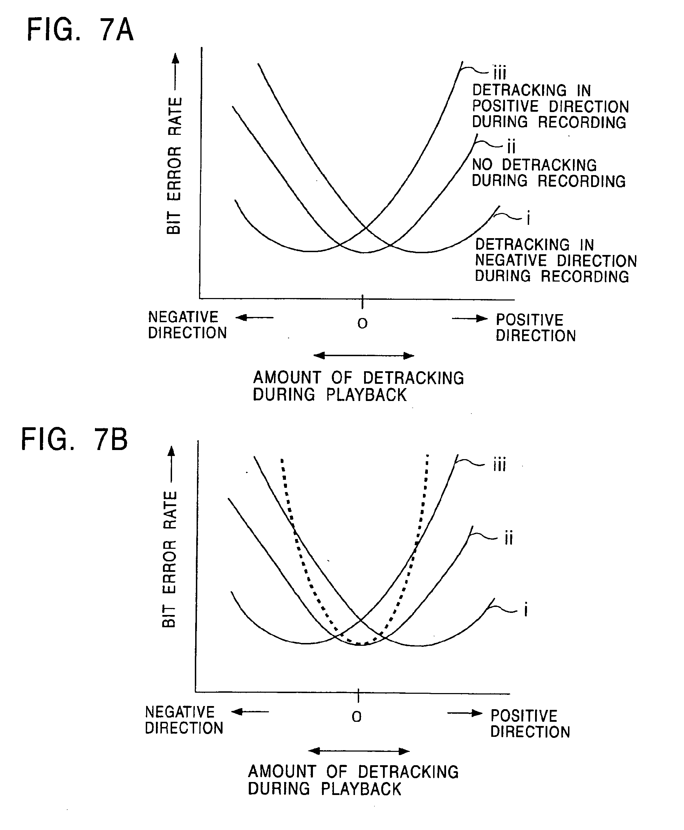

In the light of such a situation, record/playback characteristics will be discussed with reference to FIGS. 7A and 7B.

Referring to FIG. 7A, the curve (i) indicates a bit error rate when data is recorded in a negative-direction detracking state during the recording and the data is played back while the amount of detracking is changed in a step-by-step manner in the negative and positive directions during the playback.

The curve (ii) indicates a bit error rate when data is recorded without detracking during the recording, that is, when data is recorded while the light spot is controlled to be along the center of a track, and the data is played back while the amount of detracking is changed in a step-by-step manner in the negative and positive directions during the playback.

The curve (iii) indicates a bit error rate when data is recorded in the positive-direction detracking state during the recording and the data is played back while the amount of detracking is changed in a step-by-step manner in the negative direction and positive directions during the playback.

It can be seen from FIG. 7A that, when detracking is caused during recording, causing detracking in the opposite direction with substantially the same amount of detracking during the playback can reduce an error rate, i.e., can improve an error rate. This supports what has been described with reference to FIG. 2C.

Also, when detracking is caused during the recording, conversely, causing detracking in the same direction with the same of amount of detracking during playback leads to relatively sever deterioration in the error rate.

In the above-described exemplary record/playback preparation processing, during a single record/playback operation of a test pattern, the same detracking state is created, i.e., the same offset voltage Dof is applied, for both the recording and the playback. Such a record/playback operation of a test pattern is repeated multiple times while the offset voltage Dof is being changed.

In terms of characteristics of the amount of detracking versus the bit error rate, a characteristic indicated by the dotted line in FIG. 7B are obtained. That is, when a record/playback operation is performed in a detracking state with respect to a recording track, the error rate greatly deteriorates and thus the curve indicating the characteristic of the amount of detracking versus the bit error rate becomes steep as shown in FIG. 7B.

The steep curve indicates that a point for an optimum detracking state, i.e., a point for a zero amount of detracking in FIG. 7B can be detected with high accuracy.

When the light spot is supposed to be controlled to be at a tracking center by a tracking servo operation, detracking may occur in practice due to radial tilt, which is the inclination of a disk, or an asymmetric shape of a disk substrate or a track. Even in such a case, the exemplary record/playback preparation processing is adapted to detect an optimum offset voltage Dof to be applied to the tracking error signal STE such that the light spot is controlled to be along the center of a track.

In this case, in the above-described processing, based on an inspection value X that provides a steep characteristic as indicated by the dotted line in FIG. 7B, the offset voltage Dof is determined so that an optimum offset voltage Dof is obtained, i.e., a zero amount of detracking is obtained in FIG. 7B.

Thus, it is understood that, in the operation of the exemplary record/playback preparation processing, an optimum offset voltage Dof can be determined with very high accuracy.

Further, during an actual record/playback operation, since the optimum offset voltage Dof has been set, a record/playback operation is performed such that the light spot is controlled in a desired manner to be along the center of a track, regardless of a radial tilt and the like.

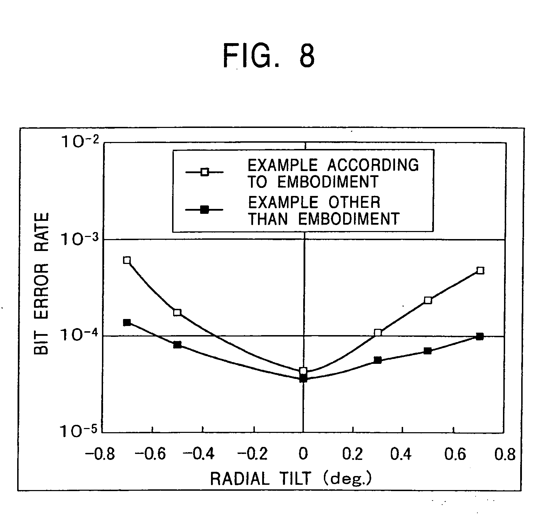

FIG. 8 shows an effect obtained when the example of the tracking offset adjustment was performed using a DWDD disk, in comparison with an example in which no tracking offset adjustment was performed. FIG. 8 shows measurements of a change in the bit error rate versus the inclination of a disk in the radial direction, the inclination being one cause of generation of detrack tracking.

In FIG. 8, the bit length is 85 nm/bit and the track pitch is 0.54 μm. It can be seen from FIG. 8 that this example can increase a margin with respect to the inclination of a disk in the radial direction.

One embodiment of the present invention has been described above in connection with, particularly, one example of the record/playback preparation processing. However, many variations are possible to the procedures of the record/playback preparation processing and to the offset application system in the present invention. An example will now be described.

In the exemplary processing shown in FIG. 5, all inspections values X, i.e., X(0) to X(m) in an offset variable voltage Dof range were sampled and an optimum point was determined from the sampled inspection values X. However, rather than sampling all the inspection values X, the arrangement may be such that only a predetermined number of inspection values in the offset variable range Dof are sampled and an optimum point is searched for using a scheme such as the approximation of a quadratic curve.

The use of the approximation of a quadratic curve or the like allows a reduction in the number of test-pattern record/playback operations to be executed and also allows an increase in the speed of the record/playback preparation processing.

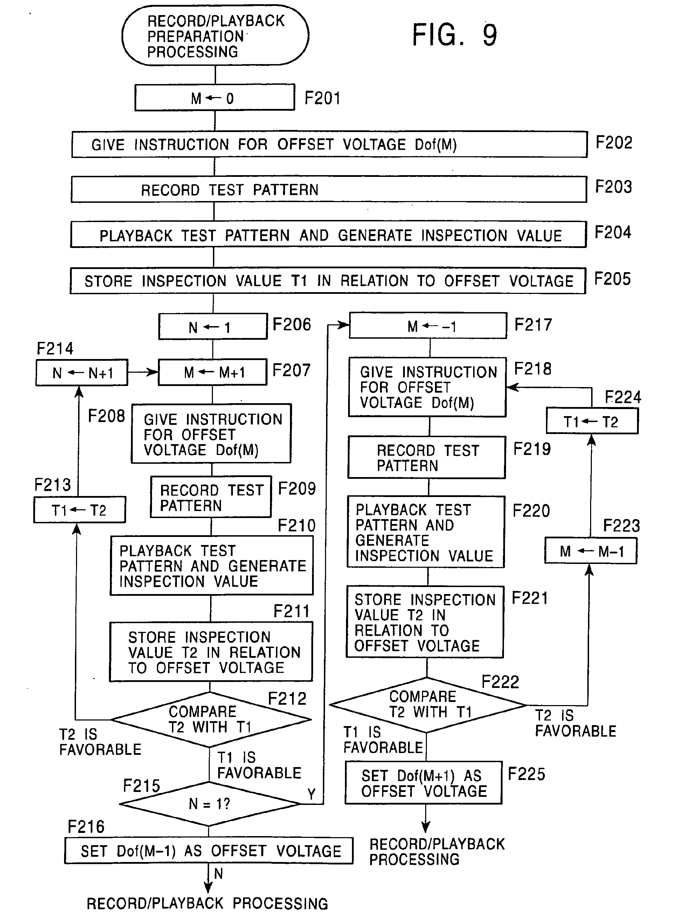

Alternatively, processing in which the storage of inspection values X as shown in FIG. 6 is not performed is also possible. An example of such processing will now be described with reference to FIG. 9.

In exemplary processing shown in FIG. 9, while an inspection value T2 obtained through the record/playback operation of a test pattern is being compared with an inspection value T1 obtained through the previous record/playback operation of the test pattern, the record/playback operation of the test pattern is repeated. Then, once an optimum offset value is found, the record/playback preparation procedure ends.

First, in step F201, the system controller 151 sets a variable M to "0". In step F202, the system controller 151 gives an instruction for an offset voltage Dof (M) to the DC-voltage application circuit 20. In step S203, the system controller 151 controls the recording of a test pattern.

The variable M is a variable for setting the value of the offset voltage Dof. In this case, the value of the variable M can vary in the range of, for example, Dof(-m) to Dof(m).

The variable M is initially set to "0" and this represents, for example, an offset voltage Dof(0) of 0 V, that is, an offset at the center of the offset variable range from the negative direction toward the positive direction.

In step F204, the system controller 151 causes the playback of the test pattern and obtains an inspection value. The processes thus far are analogous to those in steps F101 to F104 which are performed at the beginning of the processing shown in FIG. 5.

In the case of FIG. 9, in step F205, the system controller 151 stores the inspection value that has been initially obtained, as an inspection value T1, in an internal register or the like in relation to the offset voltage Dof (M).

Since the variable M has been initially set to "0", an inspection value corresponding to the offset voltage Dof(0) is stored as the inspection value T1.

Next, in step F206, the system controller 151 sets a variable N to "1".

In step F207, the system controller 151 increments the variable M. In step F208, the system controller 151 gives an instruction for the offset voltage Dof(M) to the DC-voltage application circuit 20. In step F209, the system controller 151 executes and controls the recording of the test pattern. In step F210, the system controller 151 causes the test pattern to be played back and obtains an inspection value.

That is, at this time, an inspection value corresponding to the offset voltage Dof(1) is obtained. In step F211, the system controller 151 causes the obtained value to be stored as an inspection value T2 in relation to the offset voltage Dof(1).

In step F212, the system controller 151 compares the inspection values T1 and T2. When the comparison shows that the inspection value T2 is a favorable value, in step F213, the system controller 151 updates the inspection value T1 by storing the inspection value T2 as a new inspection value T1. In step F214, the system controller 151 increments the variable N, and the process returns to step F207.

As in the same manner described above, the system controller 151 increments the variable M, repeats the processes in steps F208 to F211, and compares the inspection values T1 and T2 in step F212.

When the inspection value T2 is determined to be more favorable in step F212, this indicates a case in which the offset voltage Dof in the current record/playback of the test pattern is determined to be more suitable than the offset voltage Dof in the previous record/playback of the test pattern.

In other words, performing record/playback of the test pattern while incrementing the variable M in step F207, i.e., changing the offset voltage Dof, for example, in the positive direction, causes the offset voltage Dof to approach its optimum value.

Thus, steps F207 to F212, F213, and F214 are repeated. At a certain point, in step F214, when the inspection value T1 is found to be more favorable than the inspection value T2, this indicates that the offset voltage Dof at the point when the inspection value T2 are obtained has passed an optimum offset voltage.

In this case, since the variable N has been incremented at least once in step F214, the process proceeds from step F215 to step F216. In step F216, the offset voltage Dof corresponding to the inspection value T1 in this case, i.e., an offset voltage Dof(M-1), is determined to be an optimum offset voltage Dof and is set in the DC-voltage application circuit 20, thereby ending the record/playback preparation processing.

On the other hand, when the processes in steps F201 to F211 are performed and the initial comparison of the inspection values T1 and T2 in step F212 shows that the inspection value T1 is favorable, it can be determined that performing the record/playback of the test pattern while incrementing the variable M in step F207, i.e., changing the offset voltage Dof, for example, in the positive direction, causes the offset voltage Dof to move away from its optimum value.

In such a case, since the variable N is maintained to "1", the process proceeds from step F215 to step F217. In step F217, the system controller 151 sets the variable M to "-1".

In step F218, the system controller 151 gives an instruction for the offset voltage Dof(M) to the DC-voltage application circuit 20. In step F219, the system controller 151 executes and controls the recording of the test pattern in step F219. In step F220, the system controller 151 causes the test pattern to be played back and obtains an inspection value.

That is, at this time, an inspection value corresponding to an offset voltage Dof(-1) is obtained.

In step F221, the system controller 151 causes the obtained inspection value to be stored as an inspection value T2 in relation to the offset voltage Dof(-1).

In step F222, the system controller 151 compares the inspection values T1 and T2. When the inspection value T2 is determined to be more favorable, in step F223, the system controller 151 decrements the variable M. In step F224, the system controller 151 updates the inspection value T1 by storing the inspection value T2 as a new inspection value T1, and the process returns to step F218.

In the same manner described above, the processes in steps F218 to F218 are repeated, and in step F222, the system controller 151 compares the inspection values T1 and T2.

When the inspection value T2 is more favorable in step F222, this indicates a case in which the offset voltage Dof in the current record/playback of the test pattern is determined to be more suitable than the offset voltage Dof in the previous record/playback of the test pattern.

In other words, performing the record/playback of the test pattern while incrementing the variable M in step F223, i.e., changing the offset voltage Dof, for example, in the negative direction, causes the offset voltage Dof to approach an optimum value.

Thus, steps F218 to F222, F223, and F224 are repeated. At a certain point, in step F224, when the inspection value T1 is more favorable than the inspection value T2, this indicates that the offset voltage Dof at the point when the inspection value T2 are obtained has passed an optimum offset voltage.

In this case, the process proceeds to step F225, the offset voltage Dof corresponding to the inspection value T1 in this case, i.e., the offset voltage Dof (M+1) is determined to be an optimum offset voltage Dof and is set in the DC-voltage application circuit 20, thereby ending the record/playback preparation processing.

Such exemplary processing also makes it possible to obtain an optimum offset voltage Dof and, furthermore, to make it possible to perform offset setting with high accuracy, as in the case of FIG. 5.

In this example, the offset voltage Dof is sequentially changed, for example, from the center of an offset variable range toward the positive or negative direction and the processing is ended at a point when an optimum offset voltage Dof is found. As a result, the number of record/playback operations of a test pattern can be reduced. In particular, when the value of the offset voltage Dof for which an initial instruction is given is closer to an optimum value, the number of record/playback operations can be reduced.

Accordingly, this processing can complete the record/playback preparation processing in a short amount of time than the exemplary processing shown in FIG. 5.

In addition, since it is sufficient to hold only the inspection values T1 and T2 and the corresponding offset values in the internal register of the system controller 151 rather than recording all obtained inspection values as in the case of FIG. 5, processing for accessing the memory 163 can be eliminated. Naturally, there is an advantage in that a necessary memory capacity used during the processing can be reduced.

In the exemplary configuration shown in FIGS. 4A and 4B, the DC-voltage application circuit 20 applies an offset voltage to the tracking error signal STE.

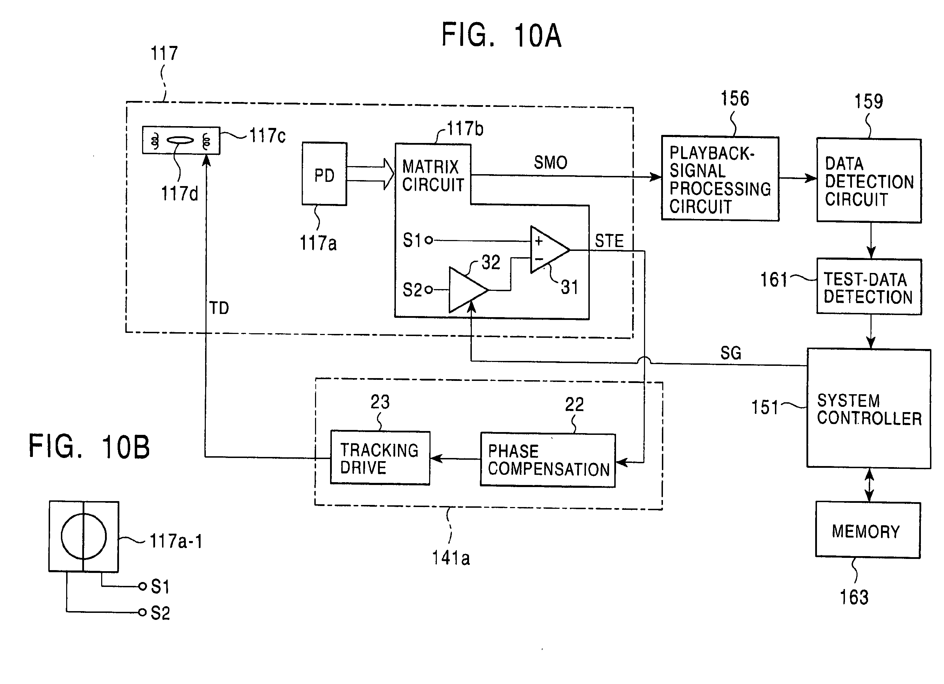

Alternatively, the tracking offset may be performed as illustrated in FIGS. 10A and 10B. The same portions as those shown in FIGS. 4A and 4B are denoted with the same reference numerals and the descriptions thereof are omitted.

As described above, a description will be given of an example in which the tracking error signal TE is generated by a push-pull system.

As shown in FIG. 10B, the optical head 117 includes a photodetector 117a, which has a photodetector 117a-1 provided with bisected light-receiving surfaces that are arranged symmetrically with respect to a track line direction. The light receiving surfaces provide respective light detection signals S1 and S2, which are, in turn, subjected to arithmetic processing by a matrix circuit 117b.

Specifically, as shown, a subtraction circuit 31 performs a subtraction operation on the light detection signals S1 and S2, so that a tracking error signal TE is generated.

In this case, for example, the light detection signal S2 is supplied to the subtraction circuit 31 via a variable gain amplifier 32.

The gain of the variable gain amplifier 32 can be variably controlled in accordance with a control signal SG output from the system controller 151.

With this arrangement, for example, when the gain of the variable gain amplifier 32 is "1", the light detection signals S1 and S2 are input to the subtraction circuit 31 at the same gain. On the other hand, when the gain of the variable gain amplifier 32 is a value other than "1", the light detection signals S1 and S2 are input the subtraction circuit 31 at different gains.

That is, in this case, changing the gain of the variable gain amplifier 32 makes it possible to change an offset component to be applied to the tracking error signal TE.

Thus, for example, in the processing shown in FIG. 5, the system controller 151 can set the gain of the variable gain amplifier 32 in step F102 to execute the record/playback of a test pattern. Then, upon determining an optimum offset value, i.e., the gain value of the variable gain amplifier 32 in this case, the system controller 151 can give an instruction for the determined gain value to the variable gain amplifier 32 and can proceed to the ordinary record/playback processing.

Thus, in the case of the processing shown in FIG. 9, the processing for giving an instruction for the offset voltage Dof for the DC-voltage application circuit 20 may be replaced with the processing for giving an instruction for the gain of the variable gain amplifier 32.

While the description in the above embodiment has been given of a case in which the tracking error signal TE is obtained by a push-pull system, the present invention is also effective for a case in which another system, i.e., a sampling servo system or the like, is used for tracking.

As can be appreciated from the above description, according to the present invention, while an offset voltage is being applied to the tracking error signal, a test pattern is recorded and played back and the quality of a playback signal is determined. This operation is executed multiple times while an offset value is being changed, and an offset value at which an optimum signal quality is obtained is determined. Performing such a test operation on a storage medium employing a domain-wall movement detection system causes characteristic curves of an offset value and a signal quality to become steep. As a result, an optimum offset point can be determined with very high accuracy.

Thus, the present invention allows high-accuracy setting of an optimum offset voltage to be applied to the tracking error signal. As a result, regardless of factors that cause detracking, such as the inclination of a disk or an asymmetric shape of a disk substrate or a recording track, data can be recorded in an appropriate tracking state. That is, record/playback operation can be executed in a state in which the light spot is controlled to be along the center of a track, so that an error rate and the like during the playback can be improved and the record/playback performance can be improved. With this arrangement, design margins for the inclination of disks and the manufacture of substrates can be increased.

Further, since data is recorded along the center of a track with stability, the influences of cross-talk and cross-light can be minimized. Thus, the present invention also has an advantage in that a margin for recording laser power is increased.

**Claims**

1. A record/playback apparatus for recording and reproducing information to and from a magneto-optical storage medium having a displacement layer, a disconnecting layer, and a recording layer that are stacked in this order, the displacement layer comprising a perpendicular magnetic film that is relatively smaller in domain-wall coercivity and that is greater in domain-wall mobility than the recording layer and the disconnecting layer comprising a magnetic layer that is lower in curie temperature than the displacement layer and the recording layer, the record/playback apparatus comprising:

   head means for illuminating the magneto-optical storage medium with laser light and for detecting reflected-light information from the magneto-optical storage medium;
   record processing means for supplying record data to the head means;
   reproduction processing means for obtaining reproduced information in accordance with the reflected-light information detected by the head means;
   tracking servo means for performing a tracking servo operation in accordance with a tracking error signal generated from the reflected-light information detected by the head means;
   offset means for applying an offset to the tracking error signal; and
   controlling means for executing a test operation in which the control means controls the record processing means such that the head means executes recording of a test pattern to the magneto-optical storage medium while an offset value applied by the offset means is set to a certain value; controls reproduction of the test pattern, the reproduction being performed by the head means and the reproduction processing means while the offset value is held; and detects at least one reproduction signal quality, wherein the controlling means executes the test operation while changing the offset value in a step-by-step manner, determines an optimum offset value, and sets the offset value of the offset means to the determined optimum offset value.

2. The record/playback apparatus according to claim 1, wherein the offset means applies a direct current component to the tracking error signal.

3. The record/playback apparatus according to claim 1, wherein the offset means amplifiers a first signal and a second signal at different gains, the first signal and the second signal being input to a differential circuit for generation of the tracking error signal.

4. The record/playback apparatus according to claim 1, further comprising storing means for storing a combination of the offset value set during the recording of the test pattern and the corresponding reproduction signal quality detected while the offset value is set, and the controlling means sets the optimum offset value in accordance with a result of the detection of the reproduction signal quality detected by the controlling means and stored by the storing means.

5. The record/playback apparatus according to claim 1, further comprising holding means for holding at least one of a plurality of the detected reproduction signal qualities, and comparing means for comparing the reproduction signal quality held by the holding means with a reproduction signal quality detected with respect to a new offset value to be set, wherein the controlling means sets the optimum offset value in accordance with a result of the comparison performed by the comparing means.

6. A record/playback method for recording data to a magneto-optical storage medium by illumining the magneto-optical storage medium with laser light from head means, for reading recorded data by detecting reflected-light information from the storage medium, and for recording and reproducing information by a tracking servo operation in accordance with a tracking error signal generated from the reflected-light information and an offset value set by offset means, wherein the magneto-optical storage medium has a displacement layer, a disconnecting layer, and a recording layer that are stacked in this order, the displacement layer comprising a perpendicular magnetic film that is relatively smaller in domain-wall coercivity and that is greater in domain-wall mobility than the recording layer and the disconnecting layer comprising a magnetic layer that is lower in curie temperature than the displacement layer and the recording layer, the record/playback method comprising:

a test step of causing the head means to record a test pattern to the magneto-optical storage medium for each of a plurality of offset values for applying an offset to the tracking error signal, causing the head means to reproduce the recorded test pattern while the offset value set during the recording of the test pattern is held, and detecting at least one reproduction signal quality of the test pattern;

an optimum-value determining step of determining an optimum value of the offset value for the magneto-optical storage medium in accordance with the reproduction signal quality obtained in the test step; and

a step of setting the optimum value determined in the optimum-value determining step in the offset means.

7. The record/playback method according claim 6, wherein, in the test step, a combination of the offset value set during the recording of the test pattern and the corresponding reproduction signal quality detected while the offset value is set is stored, and in the optimum-value determining step, the optimum offset value is determined in accordance with a result of the detection of the stored reproduction signal quality.

8. The record/playback method according to claim 6, wherein, in the test step, the at least one reproduction signal quality that is held in a holding means, which holds at least one of the detected reproduction signal qualities, is compared with a reproduction signal quality detected with respect to a new offset value to be set, and a reproduction signal quality to be held by the holding means is determined in accordance with a result of the comparison, and wherein, in the optimum-value determining step, an offset value corresponding to the reproduction signal quality held in the holding means serves as the optimum offset value.

9. A record/playback apparatus for recording and reproducing information to and from a magneto-optical storage medium having a displacement layer, a disconnecting layer, and a recording layer that are stacked in this order, the displacement layer comprising a perpendicular magnetic film that is relatively smaller in domain-wall coercivity and that is greater in domain-wall mobility than the recording layer and the disconnecting layer comprising a magnetic layer that is lower in curie temperature than the displacement layer and the recording layer, the record/playback apparatus comprising:

an optical head for illuminating the magneto-optical storage medium with laser light, detecting laser light reflected from the magneto-optical storage medium, and outputting a reproduction signal, and for generating a tracking error signal;

a tracking servo for causing tracking of the optical head to a track formed on the magneto-optical storage medium, in accordance with the tracking error signal output from the optical head and a set offset signal;

a memory; and

a controller for sequentially setting a plurality of offset signals in the tracking servo, supplying a test pattern for the magneto-optical storage medium to the optical head for each set offset signal, detecting a reproduction signal quality of the test pattern reproduced from the magneto-optical storage medium while the offset signal is held, storing the reproduction signal quality in the memory, detecting an optimum offset signal in accordance with the reproduction signal quality stored in the memory, and setting the optimum offset signal in the tracking servo.

10. The record/playback apparatus according to claim 9, wherein the controller stores the detected reproduction signal quality by associating the detected reproduction signal quality with an offset signal set when the reproduction signal quality is detected, and a offset signal corresponding to an optimum reproduction signal quality of a plurality of reproduction signal qualities stored in the memory.

11. The record/playback apparatus according to claim 9, wherein, upon determining that the detected reproduction signal quality is more favorable than the reproduction signal quality stored in the memory, the controller stores the detected reproduction signal quality in the memory.

**FIG. 1A**

**FIG. 1B**

TEMPERATURE OF MEDIUM T

TEMPERATURE DISTRIBUTION OF MAGNETIC LAYER

**FIG. 1C**

DOMAIN-WALL ENERGY DENSITY

**FIG. 1D**

**FIG. 1E**

# FIG. 2A

ISOTHERM RESULTING
FROM PLAYBACK-LIGHT
SPOT

MOVING DIRECTION OF MEDIUM

ISOTHERM RESULTING FROM
RECORDING-LIGHT SPOT

$T_p$       $T_w$

# FIG. 2B

MOVING DIRECTION OF MEDIUM

ISOTHERM RESULTING FROM
PLAYBACK-LIGHT SPOT

ISOTHERM RESULTING FROM
RECORDING-LIGHT SPOT

$T_p$       $T_w$

# FIG. 2C

MOVING DIRECTION OF MEDIUM

ISOTHERMAL RESULTING FROM
RECORDING-LIGHT SPOT    —
               ↑

$T_p$       $T_w$    ↓
              +

ISOTHERMAL RESULTING
FROM PLAYBACK-LIGHT SPOT

FIG. 3

100

EP 1 475 796 A2

# FIG. 4A

SMO

117 — 117c — 117d

PD → MATRIX CIRCUIT

117a — 117b

STE

TD

23 — TRACKING DRIVE

21 — +  +

22 — PHASE COMPENSATION

Dof

20 — DC-VOLTAGE APPLICATION CIRCUIT

141a

156 — PLAYBACK-SIGNAL PROCESSING CIRCUIT

159 — DATA DETECTION CIRCUIT

161 — TEST-DATA DETECTION

151 — SYSTEM CONTROLLER

Sof

163 — MEMORY

# FIG. 4B

117a-1

S1
S2

EP 1 475 796 A2

# FIG. 5

```
        ┌─────────────────────────┐
        │   RECORD/PLAYBACK       │
        │ PREPARATION PROCESSING  │
        └─────────────────────────┘
                    │
        ┌─────────────────────────┐
        │      M  ←──  0          │  F101
        └─────────────────────────┘
                    │
        ┌─────────────────────────┐
        │  GIVE INSTRUCTION FOR   │  F102
        │  OFFSET VOLTAGE Dof(M)  │
        └─────────────────────────┘
                    │
        ┌─────────────────────────┐
        │   RECORD TEST PATTERN   │  F103
        └─────────────────────────┘
                    │
        ┌─────────────────────────┐
        │ PLAYBACK TEST PATTERN   │  F104
        │ AND GENERATE INSPECTION │
        │        VALUE            │
        └─────────────────────────┘
                    │
        ┌─────────────────────────┐
        │ STORE INSPECTION VALUE  │  F105
        │ X(M) IN RELATION TO     │
        │   OFFSET VOLTAGE        │
        └─────────────────────────┘
                    │
  F107              F106
┌──────────────┐      ◇
│ M ←── M + 1  │◄─N─◇  M ≧ m ?  ◇
└──────────────┘      ◇
                    │ Y
        ┌─────────────────────────┐
        │   DETERMINE AND SET     │  F108
        │ OPTIMUM OFFSET VOLTAGE  │
        └─────────────────────────┘
                    │
                    ▼
        RECORD/PLAYBACK PROCESSING
```

# FIG. 6

| M | OFFSET VOLTAGE Dof | INSPECTION VALUE X |
|---|---|---|
| 0 | Dof(0) | X(0) |
| 1 | Dof(1) | X(1) |
| 2 | Dof(2) | X(2) |
| ⋮ | ⋮ | ⋮ |
| m | Dof(m) | X(m) |

FIG. 7A

FIG. 7B

# FIG. 8

FIG. 9

RECORD/PLAYBACK PREPARATION PROCESSING

M ← 0 — F201

GIVE INSTRUCTION FOR OFFSET VOLTAGE Dof(M) — F202

RECORD TEST PATTERN — F203

PLAYBACK TEST PATTERN AND GENERATE INSPECTION VALUE — F204

STORE INSPECTION VALUE T1 IN RELATION TO OFFSET VOLTAGE — F205

N ← 1 — F206

M ← −1 — F217

F214 — N ← N+1 → M ← M+1 — F207

GIVE INSTRUCTION FOR OFFSET VOLTAGE Dof(M) — F218

F224 — T1 ← T2

F208 — GIVE INSTRUCTION FOR OFFSET VOLTAGE Dof(M)

RECORD TEST PATTERN — F219

F213 — T1 ← T2

RECORD TEST PATTERN — F209

PLAYBACK TEST PATTERN AND GENERATE INSPECTION VALUE — F220

F210 — PLAYBACK TEST PATTERN AND GENERATE INSPECTION VALUE

F223 — M ← M−1

F211 — STORE INSPECTION VALUE T2 IN RELATION TO OFFSET VOLTAGE

STORE INSPECTION VALUE T2 IN RELATION TO OFFSET VOLTAGE — F221

F212 — COMPARE T2 WITH T1

COMPARE T2 WITH T1 — F222

T2 IS FAVORABLE

T1 IS FAVORABLE

T1 IS FAVORABLE

T2 IS FAVORABLE

F215 — N = 1? — Y

SET Dof(M+1) AS OFFSET VOLTAGE — F225

F216 — SET Dof(M−1) AS OFFSET VOLTAGE

RECORD/PLAYBACK PROCESSING

N

RECORD/PLAYBACK PROCESSING

24

# FIG. 10A

117

117c

117d

PD — 117a

MATRIX CIRCUIT — 117b

SMO

S1 ○

S2 ○

32

31

+ −

STE

TD

PLAYBACK-SIGNAL PROCESSING CIRCUIT — 156

DATA DETECTION CIRCUIT — 159

TEST-DATA DETECTION — 161

SG

23 TRACKING DRIVE

22 PHASE COMPENSATION

141a

SYSTEM CONTROLLER — 151

MEMORY — 163

# FIG. 10B

117a-1

S1

S2

EP 1 475 796 A2